# EUROPÄISCHE PATENTSCHRIFT

(11) **EP 3 263 666 B1**
(45) Veröffentlichungstag und Bekanntmachung des Hinweises auf die Patenterteilung: **27.06.2018**
(21) Anmeldenummer: 16176339.6
(22) Anmeldetag: 27.06.2016
(51) Int. Cl.: C09D 183/10, C08F 283/12, C08G 77/442, C09J 183/10

(54) **PERMEATIONSINHIBIERENDE TRENNBESCHICHTUNG**
PERMEATION-INHIBITING SEPARATING COATING
REVÊTEMENT DE SÉPARATION INHIBANT LA PERMÉATION

(43) Veröffentlichungstag der Anmeldung: 03.01.2018
(73) Patentinhaber: Evonik Degussa GmbH, 45128 Essen (DE)
(72) Erfinder: POMORIN, Juergen, 45239 Essen (DE); GRAUER, Dieter, 71686 Remseck (DE); DOEHLER, Hardi, 45145 Essen (DE); SCHOENEMANN, Ingo, 45473 Mülheim an der Ruhr (DE); BRAND, Mike, 45356 Essen (DE)

(56) Entgegenhaltungen:
- WO-A1-2016/096595

## Beschreibung

Diese Erfindung betrifft Zusammensetzungen enthaltend mindestens ein Siloxan, welches ethylenisch ungesättigte, radikalisch polymerisierbare Gruppen aufweist, und mindestens einen Kohlenwasserstoff mit ethylenisch ungesättigten, radikalisch polymerisierbaren Gruppen, welche bei Verwendung als Trennbeschichtung eine verbesserte Barrierewirkung aufweisen.

Polysiloxane, die (Meth)Acrylatsäureestergruppen enthalten, haben sich als unter energiereicher Strahlung härtbare Bindemittel, zum Beispiel als Beschichtungsmittel für Kunststoff- und Papieroberflächen, bewährt. Die Härtung erfolgt insbesondere durch UV-Strahlung (nach Zusatz bekannter Photoinitiatoren) oder durch Elektronenstrahlung. (Meth)Acrylatmodifizierte Organosiloxane sind in zahlreichen Patentschriften beschrieben, zum Beispiel in US6211322 und US4978726.

(Meth)Acrylatmodifizierte Organosiloxane können dreidimensional durch freie Radikale vernetzt werden und härten thermisch unter Zusatz von z. B. Peroxiden oder unter Einfluss energiereicher Strahlung, wie UV- oder Elektronenstrahlung, innerhalb kürzester Zeit zu mechanisch und chemisch widerstandsfähigen Schichten aus. Wird als Strahlungsquelle UV-Licht verwendet, erfolgt die Vernetzung vorzugsweise in Anwesenheit von Photoinitiatoren und/oder Photosensibilisatoren, wie z. B. Benzophenon und dessen Derivaten, Benzoinderivate, alpha-Hydroxyalkylphenone und Derivate sowie Acylphosphineoxid und Derivate. Übliche Photoinitiatoren werden beschrieben in "A Compilation of Photoinitiators Commercially available for UV today" (K. Dietliker, SITA Technology Ltd, London 2002).

Unverzweigte Polysiloxane können an den beiden endständigen Siloxydimethyleinheiten oder an einer bzw. mehreren Siloxymethyleinheiten in der Siloxankette modifiziert sein. Man spricht demgemäß von endständig bzw. seitenständig modifizierten Polysiloxanen. Die Modifizierung kann auch sowohl endständig als auch seitenständig sein.

Für die Herstellung von Trennbeschichtungen können einzelne oder Mischungen der vorgenannten Siloxanverbindungen auf flächige Träger aufgebracht und vernetzt werden. Flächige Träger können z.B. Papiere, Kunststofffolien auf Basis Mineralöl und auf Basis nachwachsender Rohstoffe, Gewebe, Metallfolien sein und sowohl glatt als auch mit oberflächlichen Strukturen versehen sein. Trennbeschichtungen finden z. B. Anwendung in Klebebändern, Etiketten, Verpackungen für selbstklebende Hygieneprodukte oder Abdeckbahnen für Bitumendachbahnen. Trennbeschichtungen weisen eine gute Trennwirkung gegen die in diesen Anwendungen zur Anwendung kommenden klebenden Massen auf. Durch den direkten Kontakt der Trennbeschichtung mit den klebenden Massen besteht die Gefahr der Permeation von migrierfähigen Bestandteilen aus den klebenden Massen durch die Trennschicht hindurch.

Dies kann, wie an folgenden Beispielen ausgeführt, zu unerwünschten Erscheinungen führen:
Eine Bitumendachbahn hat als klebende Masse eine Bitumenschicht auf einem Trägermaterial. Zur Abdeckung der Bitumenmasse wird häufig eine siliconbeschichtete Trennfolie auf olefinischer Basis verwendet. Im Laminat können migrierfähige Bestandteile aus der Bitumenmasse durch die Silicontrennschicht und weiter in die olefinische Folie migrieren, die sich dadurch stark verfärben und in ihrer Festigkeit verändern kann.

Eine Damenbindeneinzelverpackung, welche als klebende Masse einen sehr weichen HotMelt Kleber auf der Damenbinde hat. Zur Abdeckung der Klebermasse wird häufig eine siliconbeschichtete Trennfolie auf olefinischer Basis verwendet, welche gleichzeitig die Umverpackung der Damenbinde ist. Im Laminat können migrierfähige Bestandteile aus der Klebermasse durch die Silicontrennschicht und weiter durch die olefinische Folie migrieren und sich somit an der Außenseite der Umverpackung anreichern. Die Umverpackungen können so aneinanderkleben, was unerwünscht ist.

Ein als Klebeband ausgeführtes Thermoetikett, bestehend aus einem weißen Papier mit einer thermisch aktivierbaren Farbschicht welches als klebende Masse z.B. einen HotMelt Kleber hat. Damit das Papier mit dem HotMelt Klebstoff als Klebeband auf sich selbst gewickelt und wieder abgewickelt werden kann, ist die Oberseite des weißen Papieres mit einer Silicontrennschicht ausgestattet. Im Klebeband können migrierfähige Bestandteile aus der Klebermasse durch die Silicontrennschicht und weiter in das weiße Papier und damit die aktivierbare Farbschicht migrieren. Diese Bestandteile können mit der Zeit auch ohne thermische Aktivierung die Farbschicht zum Teil aktivieren und so zu einer Vergrauung des weißen Papieres führen.

In vielen Fällen wird zur Verhinderung der unerwünschten Effekte von migrierfähigen Bestandteilen aus der klebenden Masse an geeigneter Stelle eine Sperrschicht gegen migrierfähige Bestandteile aufgebracht. Das kann zum Beispiel eine Koextrusionsschicht mit Barrierewirkung innerhalb der olefinischen Folie oder eine Barrierebeschichtung auf dem flächigen Träger, unterhalb der Silicontrennschicht sein. Im Falle des als Klebeband ausgeführten Thermoetiketts wird üblicherweise ein Topcoat auf das weiße Papier aufgebracht, welche diese Barrierewirkung hat. Durch das Aufbringen einer Sperrschicht steigt der Preis z.B. des Thermopapieres, so dass es gewünscht ist, das die Silicontrennschicht diese Aufgabe mitübernehmen kann.

In EP2279877 werden Schutzschichten gegen Wasser, Öl und Weichmacher offenbart, die zu mindestens 60 Gew.-% Diaceton modifizierten Polyvinylalkohol und weiteren Ethylen-Vinylalkohol-Copolymere bestehen, die in eine wärmeempfindlichen Aufzeichnungsschicht eingebunden sind. Als weiterer Zusatz als Gleit- und Trennmittel wird unter anderem Polyethylenoxid vorgeschlagen.

Die Thermoschicht in Thermopapieren ohne Topcoat kann auch unter dem Einfluss von organischen Lösungsmitteln, Ölen und z.B. Handcremes aktiviert werden und so unerwünscht verfärben. Mit den weit verbreiteten organischen Lösungsmitteln Ethanol, Isopropanol, Butylacetat und Methylisobutylketon ist eine Aktivierung der Thermoschicht nach wenigen Sekunden Einwirkzeit zu beobachten. Die Wirksamkeit einer Sperrschicht oder die Barrierewirkung einer Trennbeschichtung kann mittels eines standardisierten Tests mit solchen Lösungsmitteln bewertet werden. Bleibt die weiße Papieroberfläche auch nach einer festgelegten Einwirkdauer ohne Vergrauung, ist die Thermoschicht nicht aktiviert und damit eine Barrierewirkung vorhanden. Dabei ist eine teilweise Aktivierung der Thermoschicht, also eine leichte Vergrauung, noch akzeptierbar.

Reine Siliconbeschichtungen haben eine sehr unzureichende Barrierewirkung. Siliconbeschichtungen können wegen dieser Eigenschaft zum Beispiel sehr gut als Membranbeschichtungen zur Molekularfiltration eingesetzt werden, wie in der WO 2011/067054 beschrieben wird.

Die Barrierewirkung einer Silicontrennschicht hängt dabei vom Vernetzungsgrad, also der Dichte des Polymernetzwerkes ab. Im Falle der (Meth)Acrylatmodifizierten Organosiloxane kann eine hohe Netzwerkdichte und damit verbesserte Barrierewirkung durch eine höhere Modifizierungsdichte mit polaren und/oder reaktiven Gruppen erreicht werden. Trennbeschichtungen mit solchen Eigenschaften weisen jedoch einen erhöhten Trennwert auf. Der Trennwert solcher Siloxane gegen klebende Massen ist unbefriedigend erhöht und die Barrierewirkung zudem weiter noch nicht ausreichend.

Die Beziehung zwischen Organomodifizierung, Acrylierungsgrad und Trennverhalten wurde z.B. von Hardi Döhler in "RC Silicones for the next Millenium" in Pressure Sensitive Industry: Markets and Technology Yearbook: 1999; Data Transcripts, Surrey, U.K., 1999 beschrieben und ist Gegenstand auch der PCT/EP2015/079237. Eine gute Barrierewirkung bei gleichzeitig gutem Trennwert ist deshalb mit (Meth)Acrylatmodifizierte Organosiloxanen alleine nicht befriedigend erreichbar. In der PCT/EP2015/079237 werden Mischungen aus (meth)acrylatmodifizierten Organopolysiloxanen und organische Acrylaten, welche Oxyethylengruppen enthalten, beschrieben. Durch Oxyethylengruppen im organischen Acrylat wird eine deutlichere Entmischung von der Siliconkomponente begründet, wodurch das Trennverhalten der Siliconkomponente weniger beeinträchtigt wird als die Barriereeigenschaften.

Neben den beschriebenen (meth)acrylatmodifizierten Organopolysiloxan sind strahlenhärtende Beschichtungen auf rein organischer Basis bekannt und beispielsweise in European Coatings Tech Files; Patrick Glöckner et al. "Radiation Curing Coatings and printing inks", 2008, Vincentz Network, Hannover, Germany, beschrieben. Solche rein organischen Beschichtungsmassen weisen je nach Typ eine hohe Vemetzungsdichte und somit eine bessere Barrierewirkung auf. Diese rein organischen Beschichtungsmassen haben jedoch ein sehr unbefriedigendes Trennverhalten gegen klebende Massen.

Das Dokument WO 2016/096595 offenbart in den Beispielen N-N und N-O Zusammensetzungen, die die vorliegenden Zusammensetzungen ähnlich sind. Sie enthalten die Komponente NE-I-1, die der vorliegenden Komponente K-I-1 entspricht, und die vorliegende Komponente E-II-2. Die vorliegenden Zusammensetzungen unterscheiden sich jedoch von diesen Zusammensetzungen dadurch, dass die Komponente (I) mindestens eine aromatische Gruppe aufweist. Außerdem unterscheiden sie sich von der erfinderischen Beispiele der WO 2016/096595 dadurch, dass die Komponente (I) keine Oxyethylengruppe aufweist.

Der Erfindung lag deshalb die Aufgabe zugrunde Trennbeschichtungen bereitzustellen, die gegenüber migrierfähigen Bestandteilen von z.B. Klebstoffschichten eine Barrierewirkung aufweisen. Überraschenderweise wurde gefunden, dass Zusammensetzungen enthaltend mindestens ein Siloxan, welches ethylenisch ungesättigte, radikalisch polymerisierbare Gruppen aufweist, und mindestens einen Kohlenwasserstoff mit ethylenisch ungesättigten, radikalisch polymerisierbaren Gruppen aufweist, wie in den Ansprüchen beschrieben, diese Aufgabe lösen.

Gegenstand der vorliegenden Erfindung sind deshalb permeationsinhibierende Trennbeschichtungen erhältlich durch Härtung einer Zusammensetzung enthaltend die Komponenten (I), (II) und optional (III)
(I) 10 bis 90 Gew.-% bezogen auf die Summe der Komponenten (I), (II) und (III) der Zusammensetzung, siliziumfreie Kohlenwasserstoffe umfasst, die aus den Elementen Kohlenstoff, Wasserstoff und Sauerstoff bestehen und mindestens eine ethylenisch ungesättigte, radikalisch polymerisierbare Gruppe und die keine Oxyethylengruppen aufweisen,
   wobei die Komponente (I) zu mindestens 80 bis zu 100 Gew.-% bezogen auf die Gesamtmasse der Komponente (I) einen Kohlenwasserstoff aufweist, der zwei oder mehr ethylenisch ungesättigte, radikalisch polymerisierbare Gruppen aufweist und mindestens eine aromatische Gruppe;
(II) 10 bis 90 Gew.-% bezogen auf die Summe der Komponenten (I), (II) und (III) der Zusammensetzung, eines oder mehrerer organomodifizierter Silicone mit 50 bis 500, bevorzugt 60 bis 300, mehr bevorzugt 70 bis 200, insbesondere bevorzugt 80 bis 180 Siliziumatomen, wobei 0,4 bis 10%, bevorzugt 0,6 bis 8% und mehr bevorzugt 0,8 bis 7 % der Siliziumatome ethylenisch ungesättigte, radikalisch polymerisierbare Gruppen, wobei ein Siliziumatom ein, zwei oder drei solcher Gruppen tragen kann,
(III) 0 bis 70 Gew.-% bezogen auf die Summe der Komponenten (I), (II) und (III) der Zusammensetzung eines oder mehrerer organomodifizierter Silicone mit 4 bis 40, bevorzugt 10 bis 30 Siliziumatomen, wobei 15 bis 100%, bevorzugt 20 bis 50% der Siliziumatome ethylenisch ungesättigte, radikalisch polymerisierbare Gruppen aufweisen,
und gegebenenfalls weitere Zusätze,
wobei die Trennbeschichtung eine Permeationssperre gegenüber Butylacetat aufweist, wobei die Permeationssperre wie in der Beschreibung beschrieben bestimmt wird und der damit bestimmte Delta-L*-Wert von 1 bis 20 beträgt.
1. Ein weiterer Gegenstand der vorliegenden Erfindung ist die Verwendung der permeationsinhibierenden Trennbeschichtungen erhältlich durch Härtung einer Zusammensetzung enthaltend die Komponenten (I), (II) und optional (III)
   (I) 20 bis 90 Gew.-% bezogen auf die Summe der Komponenten (I), (II) und (III) der Zusammensetzung, siliziumfreie Kohlenwasserstoffe umfasst, die aus den Elementen Kohlenstoff, Wasserstoff und Sauerstoff bestehen und die mindestens eine ethylenisch ungesättigte, radikalisch polymerisierbare Gruppe und die keine Oxyethylengruppen aufweisen,
      wobei die Komponente (I) zu mindestens 80 bis zu 100 Gew.-% bezogen auf die Gesamtmasse der Komponente (I) einen Kohlenwasserstoff aufweist, der zwei oder mehr ethylenisch ungesättigte, radikalisch polymerisierbare Gruppen und mindestens eine aromatische Gruppe aufweist;
   (II) 10 bis 90 Gew.-% bezogen auf die Summe der Komponenten (I), (II) und (III) der Zusammensetzung, eines oder mehrere organomodifizierter Silicone mit 50 bis 500, Siliziumatomen, wobei 0,4 bis 10% der Siliziumatome ethylenisch ungesättigte, radikalisch polymerisierbare Gruppen, wobei ein Siliziumatom ein, zwei oder drei solcher Gruppen tragen kann;
   (III) 0 bis 70 Gew.-% bezogen auf die Summe der Komponenten (I), (II) und (III) der Zusammensetzung eines oder mehrerer organomodifizierter Silicone mit 4 bis 40 Siliziumatomen, wobei 15 bis 100% der Siliziumatome ethylenisch ungesättigte, radikalisch polymerisierbare Gruppen aufweisen;
   und gegebenenfalls weitere Zusätze;
   wobei die Trennbeschichtung eine Permeationssperre gegenüber Butylacetat aufweist, wobei die Permeationssperre wie in der Beschreibung beschrieben bestimmt wird und der damit bestimmte Delta-L*-Wert von 1 bis 20 beträgt
als Topcoat für Thermopapiere.

Ein weiterer Gegenstand der vorliegenden Erfindung ist ein Verfahren zur Herstellung der erfindungsgemäßen permeationsinhibierenden Trennbeschichtungen.

Ein weiterer Gegenstand der vorliegenden Erfindung ist eine strahlenhärtende Beschichtungsmasse zur Herstellung der erfindungsgemäßen Trennbeschichtungen, die eine Permeationssperre gegenüber Butylacetet aufweisen, enthaltend die Komponenten (I), (II) und (III) wie oben beschrieben.

Vorteilhaft sind die erfindungsgemäßen permeationsinhibierenden Trennbeschichtungen von thermoempfindlichen Papieren, deren thermosensitive Schicht vor dem Kontakt mit migrierfähigen Substanzen wie Lösemitteln, Wachsen, Ölen, Fetten, sowie Bestandteilen von Klebstoffen geschützt werden muss, da die thermosensitive Schicht sich andernfalls verfärbt.

Ebenfalls vorteilhaft sind die erfindungsgemäßen permeationsinhibierenden Trennbeschichtungen, da sie gute Trennwerte gegenüber Klebstoffschichten aufweisen.

Insbesondere vorteilhaft sind die erfindungsgemäßen permeationsinhibierenden Trennbeschichtungen, da eine separate Trennfolie zum Schutz der Klebstoffschicht eingespart wird und damit z.B. Thermopapiere als Klebeband ausführbar sind.

Die erfindungsgemäßen Gegenstände werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Bei Prozentangaben handelt es sich, wenn nicht anders angegeben, um Angaben in Gewichtsprozent. Werden nachfolgend Mittelwerte angegeben, so handelt es sich, wenn nicht anderes angegeben, um Gewichtsmittel. Werden nachfolgend Parameter angegeben, die durch Messung bestimmt wurden, so wurden die Messungen, wenn nicht anders angegeben, bei einer Temperatur von 25 °C und einem Druck von 101.325 Pa durchgeführt.

Die Verbindungen der Komponenten (I), (II) und (III) können statistisch aufgebaut sein. Statistische Verteilungen sind blockweise aufgebaut mit einer beliebigen Anzahl an Blöcken und einer beliebigen Sequenz oder unterliegen einer randomisierten Verteilung, sie können auch alternierend aufgebaut sein oder auch über die Kette einen Gradienten bilden, insbesondere können sie auch alle Mischformen bilden, bei denen gegebenenfalls Gruppen unterschiedlicher Verteilungen aufeinander folgen können. Spezielle Ausführungen können dazu führen, dass die statistischen Verteilungen durch die Ausführung Beschränkungen erfahren. Für alle Bereiche, die nicht von der Beschränkung betroffen sind, ändert sich die statistische Verteilung nicht.

Die in den hier angeführten Formeln (I) und (II) wiedergegebenen Indexzahlen und die Wertbereiche der angegebenen Indizes verstehen sich als die Mittelwerte der möglichen statistischen Verteilung der tatsächlichen vorhandenen Strukturen und/oder deren Mischungen. Dies gilt auch für als solche an sich exakt wiedergegebene Strukturformeln.

Die Permeationssperre der erfindungsgemäßen Trennbeschichtungen wird gegenüber Butylacetat bestimmt. Hierzu wird ein Thermopapier, welches eine thermoempfindliche Schicht ohne eine schützende Beschichtung (Topcoat) aufweist, auf dieser thermoempfindlichen Schicht mit der erfindungsgemäßen permeationsinhibierenden Trennbeschichtung ausgestattet, wie in den Beispielen beschrieben. Das Thermopapier mit ausgehärteter permeationsinhibierender Trennbeschichtung (Testpapier) wird bei 25°C und einer relativen Luftfeuchte von 40% mit einer Menge von 0,5 ml Butylacetat wie in den Beispielen beschrieben versehen. Nach 20 Sekunden wird der Tropfen durch Aufsaugen mit einem saugfähigen Papier möglichst drucklos abgenommen und nach dem Ablüften bei Raumtemperatur im Abzug nach 30 Minuten der Effekt auf die thermosensitive Schicht beurteilt. Dazu wird ein SP62 Spektrophotometer der Firma X-Rite, Michigan verwendet, wie in den Beispielen beschrieben. Mit dem Spektrophotometer werden L*-Werte vor Behandlung mit Butylacetat (Blindwert) und nach Behandlung mit Butylacetat bestimmt und die Differenz Delta-L* zur Bewertung herangezogen.

Bevorzugt weisen die erfindungsgemäßen Trennbeschichtungen eine Permeationssperre auf, die in Form der Delta-L*-Werte ausgedrückt wird. Mehr bevorzugt weisen die erfindungsgemäßen Trennbeschichtungen eine Permeationssperre auf, deren Delta-L*-Werte von 1 bis 20 betragen, besonders bevorzugt deren Delta-L*-Werte von 1 bis 18 betragen und insbesondere bevorzugt deren Delta-L*-Werte von 2 bis 15 betragen.

Bevorzugt weisen die erfindungsgemäßen permeationsinhibierenden Trennbeschichtungen Trennwerte von maximal 80 cN/2,5 cm, mehr bevorzugt von maximal 50 cN/2,5 cm, mehr bevorzugt von maximal 30 cN/2,5 cm, wobei der untere Wert größer 1 cN/2,5 cm bevorzugt größer 3 cN/2,5 cm ist, wobei der Trennwert gemäß FINAT Handbook 8th Edition, The Hague/ NI, 2009 unter der Bezeichnung FTM 10 bestimmt wird.

Mehr bevorzugt weisen die erfindungsgemäßen Trennbeschichtungen eine Permeationssperre mit einem Delta-L*-Werte von 1 bis 18 und einem Trennwert von 1 cN/2,5 bis 50 cN/2,5 cm auf, mehr bevorzugt mit einem Delta-L*-Werte von 2 bis 15 und einem Trennwert von 3 cN/2,5 bis 30 cN/2,5 cm.

Bevorzugt ist die Komponente (I) frei von Siliziumatomen.

Bevorzugt ist die Komponente (I) frei von Siliziumatomen und bevorzugt weist der Kohlenwasserstoff der Komponente (I) zwei oder mehr ethylenisch ungesättigte, radikalisch polymerisierbare Gruppen auf. Mehr bevorzugt weist der Kohlenwasserstoff zwei oder mehr ethylenisch ungesättigte, radikalisch polymerisierbare Gruppen und mindestens eine aromatische Gruppe auf oder der Kohlenwasserstoff weist drei oder mehr ethylenisch ungesättigte, radikalisch polymerisierbare Gruppen auf oder eine Mischung beider Kohlenwasserstoffe. Weiter mehr bevorzugt weist der Kohlenwasserstoff zwei Acryl- oder Methacrylsäure-Gruppen und mindestens eine aromatische Gruppe auf oder der Kohlenwasserstoff weist drei oder mehr ethylenisch ungesättigte, radikalisch polymerisierbare Gruppen auf, oder mehr bevorzugt eine Mischung beider Kohlenwasserstoffe.

Bevorzugt weisen die erfindungsgemäßen Zusammensetzungen keine Komponenten auf, die frei von Siliziumatomen sind und die sowohl Oxyethylengruppen als auch ethylenisch ungesättigte, radikalisch polymerisierbare Gruppen aufweisen.

Weiter bevorzugt weisen die Kohlenwasserstoffe der Komponenten (I), (II) und (III) als ethylenisch ungesättigte, radikalisch polymerisierbare Gruppen solche ausgewählt aus Acryl- und/oder Methacrylsäure Esterfunktionen, besonders bevorzugt Acrylsäure Esterfunktionen auf.

Bevorzugt weist die Zusammensetzung die Komponente (I) zu 20 bis 70 Gew.-%, mehr bevorzugt 30 bis 60 Gew.-% bezogen auf die Summe der Komponenten (I), (II) und (III) auf.

Bevorzugt weist die Zusammensetzung die Komponente (II) zu 30 bis 80 Gew.-% und insbesondere bevorzugt 40 bis 70 Gew.-% bezogen auf die Summe der Komponenten (I), (II) und (III) der Zusammensetzung auf.

Bevorzugt weist die Zusammensetzung die Komponente (III) 0 bis 40 Gew.-% bezogen auf die Summe der Komponenten (I), (II) und (III) der Zusammensetzung auf.

Bevorzugt sind die Komponenten (II) und/oder (III), die neben den ethylenisch ungesättigten, radikalisch polymerisierbaren Gruppen auch noch nicht radikalisch polymerisierbare Gruppen enthalten. Bevorzugt sind die nicht radikalisch polymerisierbaren Estergruppen ausgewählt aus den Säureresten der Säuren Essigsäure, Propionsäure, Buttersäure, Valeriansäure und Benzoesäure, besonders bevorzugt Essigsäure.

Mehr bevorzugt sind die nicht radikalisch polymerisierbaren Gruppen Estergruppen Essigsäure und die ethylenisch ungesättigten, radikalisch polymerisierbaren Gruppen sind Acryl- und/oder Methacrylsäure Esterfunktionen.

Weiter bevorzugt sind die nicht radikalisch polymerisierbaren Estergruppen in Komponente (III) zu einem numerischen Anteil bevorzugt von 3 bis 20 %, mehr bevorzugt 5 bis 15 % bezogen auf die Anzahl aller Esterfunktionen in Komponente (III) enthalten sind.

Weiter bevorzugt sind die nicht radikalisch polymerisierbaren Estergruppen in Komponente (II) zu einem numerischen Anteil bevorzugt von 0 bis 20%, mehr bevorzugt größer 0 bis 15%, mehr bevorzugt nicht enthalten sind.

Mehr bevorzugt weist die Zusammensetzung in Komponente (II) keine nicht radikalisch polymerisierbaren Estergruppen auf und in Komponente (III) zu einem numerischen Anteil von 5 bis 15 % bezogen auf die Anzahl aller Esterfunktionen in Komponente (III) nicht radikalisch polymerisierbaren Estergruppen auf.

Mehr bevorzugt weist die Zusammensetzung die Komponente (III) in einem Prozentsatz von 0 bis 50 Gew.-% bezogen auf die Summe der Komponenten (I), (II) und (III) der Zusammensetzung auf, wobei sie 4 bis 40 Siliziumatome aufweist wobei 15 bis 100% der Siliziumatome ethylenisch ungesättigte, radikalisch polymerisierbaren Gruppen, bevorzugt Acryl- und/oder Methacrylsäure Esterfunktionen aufweisen.

Besonders bevorzugt weist die Zusammensetzung die Komponente (III) in einem Prozentsatz von 0 bis 50 Gew.-% bezogen auf die Summe der Komponenten (I), (II) und (III) der Zusammensetzung auf, wobei sie 4 bis 40 Siliziumatome aufweist wobei 15 bis 100% der Siliziumatome ethylenisch ungesättigte, radikalisch polymerisierbaren Gruppen, bevorzugt Acryl- und/oder Methacrylsäure Esterfunktionen aufweisen, die neben den ethylenisch ungesättigten, radikalisch polymerisierbaren Gruppen auch noch nicht polymerisierbare Estergruppen zu einem numerischen Anteil von 3 bis 20 % bezogen auf die Anzahl aller Esterfunktionen enthalten sind.

Bevorzugt weist die Zusammensetzung die Komponente (III) in einem Prozentsatz von 0 bis 40 % bezogen auf die Summe der Komponenten (I), (II) und (III) der Zusammensetzung auf, wobei sie 10 bis 30 Siliziumatome aufweist wobei 20 bis 50% der Siliziumatome ethylenisch ungesättigte, radikalisch polymerisierbaren Gruppen, bevorzugt Acryl-Esterfunktionen aufweisen, die neben den ethylenisch ungesättigten, radikalisch polymerisierbaren Gruppen auch noch nicht polymerisierbare Estergruppen zu einem numerischen Anteil von 5 bis 15 % bezogen auf die Anzahl aller Esterfunktionen enthalten sind.

Die Angabe, dass ein bestimmter Prozentsatz der Siliziumatome der Komponenten (II) und/oder (III) in bestimmter Weise substituiert sind, bezieht sich auf den molaren Anteil aller Siliziumatome im numerischen statistischen Mittel aller Moleküle in der jeweiligen Komponente.

Weiterhin bevorzugt sind die Komponenten (II) eine oder mehrere Verbindungen der Formel (I),

M¹aM²_{b}D¹_{c}D²_{d} (I)

mit
- M¹: = [R¹₃SiO_{1/2}],
- M²: = [R¹₂R²SiO_{1/2]},
- D¹: = [R¹₂SiO_{2/2}],
- D²: = [R¹R²SiO_{2/2}],
- a: = 0 bis 2,
- b: = 0 bis 2, wobei a + b = 2,
- c: = 50 bis 490, bevorzugt 60 bis 290, mehr bevorzugt 70 bis 190, insbesondere bevorzugt 80 bis 170,
- d: = 0 bis 15, bevorzugt 0 bis 10,
wobei das Verhältnis der Summe (b + d) zur Summe (c + d + 2) von 0,004 bis zu 0,1 ist, bevorzugt 0,006 bis 0,8, und mehr bevorzugt 0,008 bis 0,7;
wobei die Summe (c + d + 2) gleich 50 bis 500, bevorzugt 60 bis 300, mehr bevorzugt 70 bis 200, insbesondere bevorzugt 80 bis 180 beträgt,
- R¹: gleiche oder verschiedene aliphatische Kohlenwasserstoffe mit 1 bis 10 Kohlenstoffatomen oder aromatische Kohlenwasserstoffe mit 6 bis 12 Kohlenstoffatomen, bevorzugt Methyl- und/oder Phenylgruppen, insbesondere bevorzugt Methylgruppen,
- R²: gleiche oder verschiedene Kohlenwasserstoffe, welche 1 bis 5 gleiche oder verschiedene Esterfunktionen aufweisen, wobei der Kohlenwasserstoff linear, cyclisch, verzweigt und/oder aromatisch, bevorzugt linear oder verzweigt ist, wobei die Esterfunktionen ausgewählt sind aus ethylenisch ungesättigten, radikalisch polymerisierbaren Esterfunktionen und nicht radikalisch polymerisierbaren Estergruppen.

Bevorzugt weisen die Reste R² in Verbindungen der Formel (I) als ethylenisch ungesättigte, radikalisch polymerisierbare Esterfunktionen solche ausgewählt aus Acryl- und/oder Methacrylsäure Esterfunktionen, besonders bevorzugt Acrylsäure Esterfunktionen auf.

Bevorzugt weisen die Reste R² in Verbindungen der Formel (I) als nicht radikalisch polymerisierbare Estergruppen Monocarbonsäurereste auf. Bevorzugt sind die nicht radikalisch polymerisierbaren Estergruppen ausgewählt aus den Säureresten der Säuren Essigsäure, Propionsäure, Buttersäure, Valeriansäure und Benzoesäure, besonders bevorzugt Essigsäure. Mehr bevorzugt sind die Monocarbonsäurereste zu einem numerischen Anteil von 0 bis 20 %, bevorzugt größer 0 bis 15 % bezogen auf die Anzahl aller Esterfunktionen der Verbindungen der Formel (II) enthalten.

Bevorzugt weisen die Reste R² in Verbindungen der Formel (I) keine Estergruppen auf, die nicht radikalisch polymerisierbar sind.

Weiterhin bevorzugt sind die Komponenten (III) eine oder mehrere Verbindungen der Formel (II),

M¹ₑM³_{f}D¹_{g}D³ₕ (II)

mit
- M¹: = [R¹₃SiO_{1/2}],
- M³: = [R¹₂R³SiO_{1/2}],
- D¹: = [R¹₂SiO_{2/2}],
- D³: = [R¹R³SiO_{2/2}],
- e: = 0 bis 2,
- f: = 0 bis 2, bevorzugt null, wobei e + f = 2,
- g: = 0 bis 38, bevorzugt 10 bis 26,
- h: = 0 bis 20, bevorzugt 4 bis 15,
wobei das Verhältnis der Summe (f + h) zur Summe (g + h + 2) von 0,15 bis zu 1 ist, bevorzugt 0,2 bis 0,5 ist, wobei die Summe (g + h + 2) gleich 4 bis 40, bevorzugt 10 bis 30 beträgt,
wobei die Reste R¹ wie für Formel (I) angegeben definiert sind,
- R³: gleiche oder verschiedene Kohlenwasserstoffe, welche 1 bis 5 gleiche oder verschiedene Esterfunktionen aufweisen, wobei der Kohlenwasserstoff linear, cyclisch, verzweigt und/oder aromatisch, bevorzugt linear oder verzweigt ist, wobei die Esterfunktionen ausgewählt sind aus ethylenisch ungesättigten, radikalisch polymerisierbaren Esterfunktionen und nicht radikalisch polymerisierbaren Estergruppen.

Bevorzugt weisen die Reste R³ in Verbindungen der Formel (II) als ethylenisch ungesättigte, radikalisch polymerisierbare Esterfunktionen solche ausgewählt aus Acryl- und/oder Methacrylsäure Esterfunktionen, besonders bevorzugt Acrylsäure Esterfunktionen auf.

Bevorzugt weisen die Reste R³ in Verbindungen der Formel (II) als nicht radikalisch polymerisierbare Estergruppen Monocarbonsäurereste auf. Bevorzugt sind die nicht radikalisch polymerisierbaren Estergruppen ausgewählt aus den Säureresten der Säuren Essigsäure, Propionsäure, Buttersäure, Valeriansäure und Benzoesäure, besonders bevorzugt Essigsäure. Mehr bevorzugt sind die Monocarbonsäurereste zu einem numerischen Anteil von 3 bis 20 %, bevorzugt 5 bis 15 % bezogen auf die Anzahl aller Esterfunktionen der Verbindungen der Formel (II) enthalten.

Besonders bevorzugt weist die Zusammensetzung die Komponente (III) nicht auf.

Bevorzugt ist die permeationsinhibierende Trennbeschichtung eine strahlenhärtende Beschichtungsmasse. Die Trennbeschichtung ist bevorzugter weise eine abhäsive Beschichtung.

Die Trennwirkung gegen klebende Substanzen, in der technischen Anwendung zumeist Klebebänder oder Etiketten, wird durch den Trennwert ausgedrückt, wobei ein niedriger Trennwert eine gute Trennwirkung beschreibt. Diese Prüfung wird gemäß FINAT Handbook 8th Edition, The Hague/ NI, 2009 unter der Bezeichnung FTM 10 durchgeführt, mit der Änderung dass die Lagerung unter Druck bei 40°C durchgeführt wird, wie in den Beispielen beschrieben. Der Trennwert hängt von der Qualität der Trennbeschichtung (z.B. Gleichmäßigkeit, Dicke und/oder Glätte der Beschichtung), vom Klebstoff und von den Testbedingungen ab. Zur Bewertung von Trennbeschichtungen sollen deshalb gleiche Klebstoffe und Testbedingungen vorliegen. Für die Ermittlung der Trennwerte wurde das Klebeband TESA®7475, Warenzeichen der Firma tesa SE, Deutschland, Hamburg in 2,5 cm breite verwendet.

Bevorzugt weisen die erfindungsgemäßen permeationsinhibierenden Trennbeschichtungen Trennwerte von maximal 80 cN/2,5 cm, mehr bevorzugt von maximal 50 cN/2,5 cm, mehr bevorzugt von maximal 30 cN/2,5 cm, wobei der untere Wert größer 1 cN/2,5 cm bevorzugt größer 3 cN/2,5 cm ist.

Bevorzugt sind die Zusätze ausgewählt aus Photoinitiatoren, Photosensibilisatoren, Füllstoffen, Pigmenten, Lösemittel, phosphorhaltige Verbindungen welche unter UV Licht polymerisieren, Stabilisatoren z.B. Phosphite oder hindered amine light stabilizers (HALS), Anti Misting Additive und Amin-Synergisten.

Die erfindungsgemäßen permeationsinhibierenden Trennbeschichtungen können dreidimensional durch freie Radikale vernetzt sein. Unter Einfluss energiereicher Strahlung, wie UV- oder Elektronenstrahlung, innerhalb kürzester Zeit zu mechanisch und chemisch widerstandsfähigen Schichten aus, die bei geeigneter Zusammensetzung vorbestimmbare abhäsive Eigenschaften wie auch Haftungseigenschaften aufweisen.

Wird als Strahlungsquelle UV-Licht verwendet, erfolgt die Vernetzung/Härtung vorzugsweise in Anwesenheit von Photoinitiatoren und/oder Photosensibilisatoren.

Bevorzugt sind Photoinitiatoren vom Norrish Typ 1, z.B. Benzoinderivate, alpha-Hydroxyalkylphenone und Derivate sowie Acylphosphineoxid und Derivate.

Bevorzugte Zusammensetzungen weisen Photoinitiatoren und/oder Photosensibilisatoren in Mengen von 0,01 bis 10 Gew.-%, insbesondere von 0,1 bis 5 Gew.-% auf, bezogen auf die gesamte Beschichtungsmasse.

Die Photoinitiatoren und/oder Photosensibilisatoren sind bevorzugt in den Zusammensetzungen löslich, mehr bevorzugt löslich im Bereich von 0,01 bis 10 Gew.-%, insbesondere von 0,1 bis 5 Gew.-% bezogen auf die gesamte Zusammensetzung.

Geeignete UV Strahlenquellen zur Aushärtung der Zusammensetzungen sind Mitteldruckquecksilberdampflampen, gegebenenfalls dotiert oder Niederdruckquecksilberdampflampen, UV-LED-Lampen oder sogenannte Excimerstrahler. Die UV-Strahler können polychromatisch oder monochromatisch sein. Bevorzugt liegt der Emmisionsbereich des Strahlers im Absorptionsbereich der Photoinitiatoren und/oder Photosensibilisatoren.

Bevorzugt werden die erfindungsgemäßen Trennbeschichtungen verwendet als Trennbeschichtung eines selbstklebenden Thermopapiers, insbesondere eines selbstklebenden Thermopapiers, dass als Klebeband ausgeführt ist.

### Beispiele: Komponenten

Komponente I:
K-I-1: SR 489, Tridecylacrylat, Sartomer, Frankreich
K-I-2: Ebecryl® 11, (ein Polyethylenglykol 600 diacrylat mit Mw 700 g/mol), Allnex, Belgien
K-I-3: PETIA, (eine Mischung aus Pentaerythritol tri- und tetraacrylat), Allnex, Belgien
K-I-4: Ebecryl® 150, (ein Bisphenol-A-Derivat diacrylat), Allnex, Belgien
K-I-5: Ebecryl® OTA 480, (ein propoxyliertes Glycerintriacrylat), Allnex, Belgien
K-I-6: Ebecryl® 605 (ein Gemisch aus 80% Bisphenol-A-diepoxyacrylat und 20% Tripropylenglykoldiacrylat), Allnex, Belgien
K-I-7: Laromer® TMPTA, Trimethylolpropantriacrylat, BASF, Deutschland
Ebecryl® ist ein Warenzeichen der Cytec Surface Specialties S.A. Anderlecht, Belgien
Laromer® ist ein Warenzeichen der BASF Ludwigshafen, Deutschland

Komponente II:
E-II-1: Ein ausschließlich endständig modifiziertes Silicon mit N=50, wobei N die Anzahl der Siliziumatome im Molekül bedeutet. Hergestellt nach in der US6211322 beschriebenem Verfahren über ein entsprechendes Wasserstoffsiloxan durch Hydrosilylierung mit Trimethylolpropanmonoallylether und anschließender Veresterung mit Acrylsäure, so dass 4 Acrylatgruppen pro Molekül vorhanden sind, entsprechend sind 4% der Siliziumatome acryliert.
E-II-2: Ein ausschließlich endständig modifiziertes Silicon mit N=100. Hergestellt wie E-II-1, entsprechend sind 2% der Siliziumatome acryliert.
E-II-3: Ein ausschließlich endständig modifiziertes Silicon mit N=200. Hergestellt wie E-II-1, entsprechend sind 1% der Siliziumatome acryliert.
S-II-1: Ein ausschließlich seitenständig modifiziertes Silicon mit N=100. Hergestellt nach in der US4978726 beschriebenem Verfahren über ein Wasserstoffsiloxan mit 6 seitenständigen SiH Gruppen durch Hydrosilylierung mit Allylglycidether und anschließender Ringöffnung mit Acrylsäure, so dass 6 Acrylatgruppen pro Molekül vorhanden sind, entsprechend sind 6% der Siliziumatome acryliert.
S-II-2: Ein end- und seitenständig modifiziertes Silicon mit N=150. Hergestellt nach in der US6211322 beschriebenem Verfahren über ein Wasserstoffsiloxan mit 6 seitenständigen und 2 endständigen SiH Gruppen durch Hydrosilylierung mit 5-Hexen-1ol und anschließender Veresterung mit Acrylsäure, so dass 8 Acrylatgruppen pro Molekül vorhanden sind, entsprechend sind 5,3% der Siliziumatome acryliert.

Komponente III:
S-III-1: Ein ausschließlich seitenständig modifiziertes Silicon mit N=40. Hergestellt nach in der US4978726 beschriebenem Verfahren über ein Wasserstoffsiloxan mit 6 seitenständigen SiH Gruppen durch Hydrosilylierung mit Allylglycidether und anschließender Ringöffnung mit Acrylsäure, so dass 6 Acrylatgruppen pro Molekül vorhanden sind, entsprechend sind 15% der Siliziumatome acryliert.
S-III-2: Ein ausschließlich seitenständig modifiziertes Silicon mit N=20. Hergestellt nach in der US4978726 beschriebenem Verfahren über ein Wasserstoffsiloxan mit 6 seitenständigen SiH Gruppen durch Hydrosilylierung mit Allylglycidether und anschließender Ringöffnung mit einem Gemisch aus 15% Essigsäure und 85% Acrylsäure, so dass 5,1 Acrylatgruppen pro Molekül vorhanden sind, entsprechend sind 25,5% der Siliziumatome acryliert.

### Beispiele: Zusammensetzungen

**Tabelle 1: Beispielhafte Zusammensetzungen, Gehaltsangaben in Gew.-% bezogen auf die Summe der angeführten Komponenten**

| Beispiel | Komponenten I | | Komponente II | | Komponente III | |
|---|---|---|---|---|---|---|
| | Gehalt [Gew.-%] | | Gehalt [Gew.-%] | | Gehalt [Gew.-%] | |
| A | K-I-5 | 5 | E-II-2 | 95 | | 0 |
| B | K-I-5 | 10 | E-II-2 | 90 | | 0 |
| C | K-I-5 | 50 | E-II-2 | 50 | | 0 |
| D | K-I-5 | 90 | E-II-2 | 10 | | 0 |
| E | K-I-5 | 95 | E-II-2 | 5 | | 0 |
| F | K-I-5 | 50 | E-II-1 | 50 | | 0 |
| G | K-I-5 | 50 | E-II-3 | 50 | | 0 |
| H | K-I-5 | 50 | S-II-1 | 50 | | 0 |
| I | K-I-5 | 50 | S-II-2 | 50 | | 0 |
| J | K-I-5 | 20 | E-II-2 | 60 | S-III-1 | 20 |
| K | K-I-5 | 20 | E-II-2 | 60 | S-III-2 | 20 |
| L | K-I-5 | 20 | E-II-2 | 20 | S-III-2 | 60 |
| M | K-I-2 | 50 | E-II-2 | 50 | | 0 |
| N | K-I-3 | 50 | E-II-2 | 50 | | 0 |
| O | K-I-4 | 50 | E-II-2 | 50 | | 0 |
| P | K-I-6 | 50 | E-II-2 | 50 | | 0 |
| Q | K-I-7 | 50 | E-II-2 | 50 | | 0 |
| R | K-I-4 | 20 | E-II-2 | 50 | | 0 |
| | K-I-7 | 30 | | | | |
| S | K-I-4 | 20 | E-II-2 | 50 | | 0 |
| | K-I-5 | 30 | | | | |
| T | K-I-5 | 25 | E-II-1 | 50 | | 0 |
| | K-I-1 | 25 | | | | |
| U | | 0 | E-II-2 | 70 | S-III-2 | 30 |
| V | | 0 | S-II-2 | 70 | S-III-2 | 30 |
| W | | 0 | S-II-1 | 100 | | |
| X | | 0 | | 0 | S-III-2 | 100 |

### Beispiele: Anwendungstechnische Überprüfung

Zur Herstellung von strahlenhärtenden Beschichtungsmassen wurden je 100g Zusammensetzungen mit 2% Photoinitiator TEGO® A18 der Evonik Industries AG vermengt. Die Beschichtungsmassen wurden durch Verrühren von Hand mit einem Spatel solange gerührt bis keine Inhomogenität mehr sichtbar war.

Die Beschichtungsmasse wurden auf Mitsubishi Thermopapier Type LL 8077, welches keine Schutzschicht auf der Thermoschicht hat, von 50cm Breite, welches zuvor mit einer Generatorleistung von 1 kW einer Coronavorbehandlung unterzogen wurde, aufgebracht. Das Aufbringen erfolgte mittels eines 5-Walzenbeschichtungswerkes der Firma COATEMA® Coating Machinery GmbH, Dormagen, Deutschland mit einem Flächengewicht von ca. 1,2 g/m² und die Härtung erfolgte durch Einwirkung von UV-Licht einer Mitteldruckquecksilberdampflampe der Firma IST® Metz GmbH, Nürtingen Deutschland mit 60 W/cm bei einer Bahngeschwindigkeit von 100 m/min unter Stickstoffatmosphäre mit einem Restsauerstoffgehalt unter 50 ppm.

Die beschichteten Proben wurden einer Prüfung auf Qualität der Trennbeschichtung, Barrierewirkung und Trennwert unterzogen.

Qualität der Trennbeschichtung: Die Beschichtung muss vollflächig und geschlossen sein. Dies wurde mittels Anfärbung der Beschichtung mit einer Tinte aus 0,1% Methylenblau in Wasser mit einer Kontaktzeit von einer Minute ermittelt. Die Tinte wurde nach Ablauf der Kontaktzeit ablaufen gelassen und mit einem weichen Tuch durch Tupfen vollständig entfernt. Ist die Beschichtung mit Fehlstellen versehen, dringt die Tinte durch diese Fehlstellen in die Papierfaser und färbt die weiße Oberfläche blau. Die Anfärbung darf nur gering ausgeprägt sein um eine für den Test geeignete Beschichtung zu ergeben. Ist die Beschichtung nicht vollflächig, kann die Barrierewirkung nicht hinreichend bewertet werden. Der Grad der Blauanfärbung wird von einem ausgebildeten Panel bewertet. Die Auswertung wird kategorisiert in Schulnoten von 1 bis 3, wobei 3 ungenügend entspricht.

Note 1 = sehr gut geschlossene Schicht, keine blauen Punkte sichtbar.

Note 2= noch akzeptable Beschichtung, wenige blaue Punkte feststellbar.

Note 3= unzureichend geschlossene Schicht, viele blaue Punkte sichtbar.

Die Untersuchung der Barrierewirkung und Trennwirkung wird nur mit Beschichtungen der Qualitätsnote 1 durchgeführt.

Barrierewirkung: Durch Aufbringen von 0,5 ml Butylacetat auf die gehärtete Trennbeschichtung wird die Barrierewirkung beurteilt. Dazu wird das Lösungsmittel bei 25°C und einer relativen Luftfeuchte von 40% für eine Einwirkdauer von 20 Sekunden auf die Oberfläche gegeben und durch Aufsaugen mit einem saugfähigen Papier möglichst drucklos abgenommen und nach dem Ablüften bei Raumtemperatur im Abzug nach 30 Minuten der Effekt auf die thermosensitive Schicht beurteilt. Hat die Beschichtung keine gute Barrierewirkung, dringt Butylacetat durch die Beschichtung durch in die Papierfaser und aktiviert die Farbschicht, wodurch die weiße Papieroberfläche grau bis schwarz gefärbt wird. Für eine gute Barrierewirkung darf die Anfärbung nur gering ausgeprägt sein. Zur Bewertung wird ein SP62 Spektrophotometer der Firma X-Rite, Michigan verwendet. Mit dem Spektrophotometer werden L*-Werte vor Behandlung mit Butylacetat (Blindwert) und nach Behandlung mit Butylacetat bestimmt und die Differenz Delta-L*-Werte zur Bewertung herangezogen. Bevorzugt weisen die erfindungsgemäßen Trennbeschichtungen Delta-L*-Werte von 0 bis 20 auf und sind demnach im Sinne der Erfindung permeationsinhibierend.

Trennwert: Die Trennwirkung gegen klebende Substanzen, in der technischen Anwendung zumeist Klebebänder oder Etiketten, wird durch den Trennwert ausgedrückt, wobei ein niedriger Trennwert eine gute Trennwirkung beschreibt. Der Trennwert hängt von der Qualität der Trennbeschichtung, vom Klebstoff und von den Testbedingungen ab. Zur Bewertung von Trennbeschichtungen sollen deshalb gleiche Klebstoffe und Testbedingungen vorliegen. Für die Ermittlung der Trennwerte wurde das Klebeband TESA®7475, Warenzeichen der Firma tesa SE, Deutschland, Hamburg in 2,5 cm breite verwendet. Diese Prüfung wird gemäß FINAT Handbook 8th Edition, The Hague/ NI, 2009 unter der Bezeichnung FTM 10 durchgeführt, mit der Änderung dass die Lagerung unter Druck bei 40°C durchgeführt wird.

Die Ergebnisse der Barrierewirkung und der Trennwerte sind in Tabelle 2 dargestellt. Für alle Beispiele wurden Trennbeschichtungen mit der Qualitätsnote 1 verwendet.

**Tabelle 2: Ergebnisse der beispielhaften Zusammensetzungen, Angegeben werden die Barrierewirkung (Delta-L*-Werte mit SP62 Spektrophotometer) und Trennwerte (TW) mit TESA®7475 in cN/2,5 cm nach 24 Stunden 40°C Lagerung.**

| Beispiel | TW (TESA 7475) [cN/2,5 cm] | Barrierewirkung (Delta-L*) | Erfindungsgemäß |
|---|---|---|---|
| A | 6 | 32,9 | Nein |
| B | 8 | 18,21 | Ja |
| C | 9 | 5,92 | Ja |
| D | 49 | 3,54 | Ja |
| E | 160 | 3,12 | Nein |
| F | 15 | 4,71 | Ja |
| G | 6 | 8,95 | Ja |
| H | 12 | 8,74 | Ja |
| I | 8 | 7,13 | Ja |
| J | 9 | 16,41 | Ja |
| K | 8 | 14,3 | Ja |
| L | 55 | 13,13 | Ja |
| M | 10 | 25,31 | Nein |
| N | 13 | 13,17 | Ja |
| O | 17 | 19,23 | Ja |
| P | 10 | 9,13 | Ja |
| Q | 13 | 9,86 | Ja |
| R | 14 | 11,15 | Ja |
| S | 12 | 7,31 | Ja |
| T | 13 | 35,4 | Nein |
| U | 6 | 38,3 | Nein |
| V | 5 | 39,8 | Nein |
| W | 10 | 34,9 | Nein |
| X | 255 | 23,53 | Nein |

Aus Tabelle 2 ist ersichtlich, dass erfindungsgemäße Zusammensetzungen eine gute Barrierewirkung gegen Butylacetat und gleichzeitig eine gute Trennwirkung aufweisen. Nicht erfindungsgemäße Zusammensetzungen haben eine schlechte Barrierewirkung bei guter Trennwirkung oder sogar in beiden Eigenschaften schlechte Ergebnisse.

Während Zusammensetzung B, C und D gute Barrierewirkung aufweisen, verliert Zusammensetzung A diese Eigenschaft. Zusammensetzung E hat zwar eine gute Barrierewirkung, hat jedoch keine gute Trennwirkung. Die Zusammensetzungen A bis E zeigen, dass sich ein höherer Anteil der Komponente II positiv auf das Trennverhalten auswirkt, jedoch negativ auf die Barrierewirkung.

Weiterhin ist ersichtlich, dass die erfindungsgemäßen Beispiele der Komponente II in den Zusammensetzungen F, G, H und I alle eine gute Barrierewirkung bei gutem Trennverhalten zeigen. Die Zusammensetzungen J, K und L enthalten zusätzlich die Komponente III, wodurch die Barrierewirkung nicht oder nur wenig negativ beeinflusst wird.

Weiterhin ist ersichtlich, dass die Zusammensetzungen M bis Q und R, S, T, welche unterschiedliche Komponenten I, oder Mischungen daraus, enthalten, unterschiedliche Barrierewirkung ermöglichen.

So ist zum Beispiel die Zusammensetzung M ohne gute Barrierewirkung weil die organische Acrylatkomponente K-I-2 mit der Silicon-Komponente II stark unverträglich ist. Diese Unverträglichkeit wird durch die Oxyethlengruppen in der Komponente K-I-2 verursacht. Die Mischung M ist deshalb ein deutlich zweiphasiges System. Da sich solche Komponenten I mit Oxyethylengruppen nur gering in die Silicon-Komponente II einmischen, ermöglichen sie keine oder nur eine unzureichend stärkere Vernetzung der an sich schwach vernetztenden Silicon Komponente II. Solche Mischungen sind wie am Beispiel M ersichtlich ohne gute Barrierewirkung. Diese Mischungen sind deshalb nicht erfindungsgemäß.

Weiterhin ist ersichtlich, dass die Zusammensetzung T, welche einen hohen Anteil Komponente I mit nur einer ethylenisch ungesättigten radikalisch polymerisierbaren Gruppe enthält und die deshalb nicht erfindungsgemäß ist, keine gute Barrierewirkung erreichen kann.

Die Zusammensetzungen U, V und W sind Beispiele für die Komponente II, Zusammensetzungen U und V auch enthaltend Komponente III, welche keine Komponente I enthalten. Sie zeigen alle keine gute Barrierewirkung. Das gilt auch für die Zusammensetzung X, welche ein Beispiel für die Komponente III ist und zusätzlich zur schlechten Barrierewirkung kein gutes Trennverhalten hat.

Durch die Anwendung der erfindungsgemäßen Zusammensetzungen gelingt es also gleichzeitig eine gute Barrierewirkung und einen niedrigen Trennwert zu erhalten.

## Patentansprüche

1. Permeationsinhibierende Trennbeschichtungen erhältlich durch Härtung einer Zusammensetzung enthaltend die Komponenten (I), (II) und optional (III)
(I) 20 bis 90 Gew.-% bezogen auf die Summe der Komponenten (I), (II) und (III) der Zusammensetzung, siliziumfreie Kohlenwasserstoffe umfasst, die aus den Elementen Kohlenstoff, Wasserstoff und Sauerstoff bestehen und die mindestens eine ethylenisch ungesättigte, radikalisch polymerisierbare Gruppe und die keine Oxyethylengruppen aufweisen, wobei die Komponente (I) zu mindestens 80 bis zu 100 Gew.-% bezogen auf die Gesamtmasse der Komponente (I) einen Kohlenwasserstoff aufweist, der zwei oder mehr ethylenisch ungesättigte, radikalisch polymerisierbare Gruppen aufweist und mindestens eine aromatische Gruppe;
(II) 10 bis 90 Gew.-% bezogen auf die Summe der Komponenten (I), (II) und (III) der Zusammensetzung, eines oder mehrere organomodifizierter Silicone mit 50 bis 500, Siliziumatomen, wobei 0,4 bis 10% der Siliziumatome ethylenisch ungesättigte, radikalisch polymerisierbare Gruppen, wobei ein Siliziumatom ein, zwei oder drei solcher Gruppen tragen kann;
(III) 0 bis 70 Gew.-% bezogen auf die Summe der Komponenten (I), (II) und (III) der Zusammensetzung eines oder mehrerer organomodifizierter Silicone mit 4 bis 40 Siliziumatomen, wobei 15 bis 100% der Siliziumatome ethylenisch ungesättigte, radikalisch polymerisierbare Gruppen aufweisen;
und gegebenenfalls weitere Zusätze;
wobei die Trennbeschichtung eine Permeationssperre gegenüber Butylacetat aufweist, wobei die Permeationssperre wie in der Beschreibung beschrieben bestimmt wird und der damit bestimmte Delta-L*-Wert von 1 bis 20 beträgt.

2. Permeationsinhibierende Trennbeschichtungen gemäß Anspruch 1 **dadurch gekennzeichnet, dass** deren Delta-L*-Werte von 1 bis 18 betragen und insbesondere bevorzugt deren Delta-L*-Werte von 2 bis 15 betragen.

3. Permeationsinhibierende Trennbeschichtungen gemäß Anspruch 1 oder 2 **dadurch gekennzeichnet, dass** deren Trennwerte von maximal 80 cN/2,5 cm, mehr bevorzugt von maximal 50 cN/2,5 cm, mehr bevorzugt von maximal 30 cN/2,5 cm, wobei der untere Wert größer 1 cN/2,5 cm bevorzugt größer 3 cN/2,5 cm sind, wobei der Trennwert gemäß FINAT Handbook 8th Edition, The Hague/ NI, 2009 unter der Bezeichnung FTM 10 bestimmt wird.

4. Permeationsinhibierende Trennbeschichtungen gemäß einem der Ansprüche 1 bis 3 **dadurch gekennzeichnet, dass** keine der Komponenten, die frei von Siliziumatomen sind, sowohl Oxyethylengruppen als auch ethylenisch ungesättigte, radikalisch polymerisierbare Gruppen aufweisen.

5. Permeationsinhibierende Trennbeschichtungen gemäß einem der Ansprüche 1 bis 4 **dadurch gekennzeichnet, dass** die Komponenten (I), (II) und (III) als ethylenisch ungesättigte, radikalisch polymerisierbare Gruppen solche ausgewählt aus Acryl- und/oder Methacrylsäure Esterfunktionen, besonders bevorzugt Acrylsäure Esterfunktionen aufweisen.

6. Permeationsinhibierende Trennbeschichtungen gemäß einem der Ansprüche 1 bis 5 **dadurch gekennzeichnet, dass** die Komponente (I) zu 20 bis 70 Gew.-%, mehr bevorzugt 30 bis 60 Gew.-% bezogen auf die Summe der Komponenten (I), (II) und (III),
die Komponente (II) zu 30 bis 80 Gew.-% und insbesondere bevorzugt 40 bis 70 Gew.-% bezogen auf die Summe der Komponenten (I), (II) und (III) der Zusammensetzung und
die Komponente (III) 0 bis 40 Gew.-% bezogen auf die Summe der Komponenten (I), (II) und (III) der Zusammensetzung
enthalten sind.

7. Permeationsinhibierende Trennbeschichtungen gemäß einem der Ansprüche 1 bis 6 **dadurch gekennzeichnet, dass** die Komponenten (II) eine oder mehrere Verbindungen der Formel (I),
M¹ₐM²_{b}D¹_{c}D²_{d} (I)
mit
M¹ = [R¹₃SiO_{1/2}],
M² = [R¹₂R²SO_{1/2}],
D¹ = [R¹₂SiO_{2/2}],
D² = [R¹R²SiO_{2/2}],
a = 0 bis 2,
b = 0 bis 2, wobei a + b = 2,
c = 50 bis 490, bevorzugt 60 bis 290, mehr bevorzugt 70 bis 190, insbesondere bevorzugt 80 bis 170,
d = 0 bis 15, bevorzugt 0 bis 10,
wobei das Verhältnis der Summe (b + d) zur Summe (c + d + 2) von 0,004 bis zu 0,1 ist, bevorzugt 0,006 bis 0,8, und mehr bevorzugt 0,008 bis 0,7;
wobei die Summe (c + d + 2) gleich 50 bis 500, bevorzugt 60 bis 300, mehr bevorzugt 70 bis 200, insbesondere bevorzugt 80 bis 180 beträgt,
R¹ gleiche oder verschiedene aliphatische Kohlenwasserstoffe mit 1 bis 10 Kohlenstoffatomen oder aromatische Kohlenwasserstoffe mit 6 bis 12 Kohlenstoffatomen, bevorzugt Methyl- und/oder Phenylgruppen, insbesondere bevorzugt Methylgruppen,
R² gleiche oder verschiedene Kohlenwasserstoffe, welche 1 bis 5 gleiche oder verschiedene Esterfunktionen aufweisen, wobei der Kohlenwasserstoff linear, cyclisch, verzweigt und/oder aromatisch, bevorzugt linear oder verzweigt ist, wobei die Esterfunktionen ausgewählt sind aus ethylenisch ungesättigten, radikalisch polymerisierbaren Esterfunktionen und nicht radikalisch polymerisierbaren Estergruppen.

8. Permeationsinhibierende Trennbeschichtungen gemäß einem der Ansprüche 1 bis 7 **dadurch gekennzeichnet, dass** die Komponenten (III) eine oder mehrere Verbindungen der Formel (II),
M¹ₑM³_{f}D¹_{g}D³ₕ (II)
mit
M¹ = [R¹₃SiO_{1/2}],
M³ = [R¹₂R³SiO_{1/2}],
D¹ = [R¹₂SiO_{2/2}],
D³ = [R¹R³SiO_{2/2}],
e = 0 bis 2,
f = 0 bis 2, bevorzugt null, wobei e + f = 2,
g = 0 bis 38, bevorzugt 10 bis 26,
h = 0 bis 20, bevorzugt 4 bis 15,
wobei das Verhältnis der Summe (f + h) zur Summe (g + h + 2) von 0,15 bis zu 1 ist, bevorzugt 0,2 bis 0,5 ist,
wobei die Summe (g + h + 2) gleich 4 bis 40, bevorzugt 10 bis 30 beträgt,
wobei die Reste R¹ wie für Formel (I) angegeben definiert sind,
R³ gleiche oder verschiedene Kohlenwasserstoffe, welche 1 bis 5 gleiche oder verschiedene Esterfunktionen aufweisen, wobei der Kohlenwasserstoff linear, cyclisch, verzweigt und/oder aromatisch, bevorzugt linear oder verzweigt ist, wobei die Esterfunktionen ausgewählt sind aus ethylenisch ungesättigten, radikalisch polymerisierbaren Esterfunktionen und nicht radikalisch polymerisierbaren Estergruppen.

9. Permeationsinhibierende Trennbeschichtungen gemäß einem der Ansprüche 1 bis 8 **dadurch gekennzeichnet, dass** nicht radikalisch polymerisierbare Estergruppen in Komponente (III) zu einem numerischen Anteil bevorzugt von 3 bis 20 %, mehr bevorzugt 5 bis 15 % bezogen auf die Anzahl aller Esterfunktionen in Komponente (III) enthalten sind.

10. Permeationsinhibierende Trennbeschichtungen gemäß einem der Ansprüche 1 bis 9 **dadurch gekennzeichnet, dass** in Komponente (II) keine nicht radikalisch polymerisierbaren Estergruppen und in Komponente (III) die nicht radikalisch polymerisierbaren Estergruppen zu einem numerischen Anteil von 5 bis 15 % bezogen auf die Anzahl aller Esterfunktionen in Komponente (III) enthalten sind.

11. Verwendung der permeationsinhibierenden Trennbeschichtungen erhältlich durch Härtung einer Zusammensetzung enthaltend die Komponenten (I), (II) und optional (III)
(IV) 20 bis 90 Gew.-% bezogen auf die Summe der Komponenten (I), (II) und (III) der Zusammensetzung, siliziumfreie Kohlenwasserstoffe umfasst, die aus den Elementen Kohlenstoff, Wasserstoff und Sauerstoff bestehen und die mindestens eine ethylenisch ungesättigte, radikalisch polymerisierbare Gruppe und die keine Oxyethylengruppen aufweisen, wobei die Komponente (I) zu mindestens 80 bis zu 100 Gew.-% bezogen auf die Gesamtmasse der Komponente (I) einen Kohlenwasserstoff aufweist, der zwei oder mehr ethylenisch ungesättigte, radikalisch polymerisierbare Gruppen und mindestens eine aromatische Gruppe aufweist;
(V) 10 bis 90 Gew.-% bezogen auf die Summe der Komponenten (I), (II) und (III) der Zusammensetzung, eines oder mehrere organomodifizierter Silicone mit 50 bis 500, Siliziumatomen, wobei 0,4 bis 10% der Siliziumatome ethylenisch ungesättigte, radikalisch polymerisierbare Gruppen, wobei ein Siliziumatom ein, zwei oder drei solcher Gruppen tragen kann;
(VI) 0 bis 70 Gew.-% bezogen auf die Summe der Komponenten (I), (II) und (III) der Zusammensetzung eines oder mehrerer organomodifizierter Silicone mit 4 bis 40 Siliziumatomen, wobei 15 bis 100% der Siliziumatome ethylenisch ungesättigte, radikalisch polymerisierbare Gruppen aufweisen;
und gegebenenfalls weitere Zusätze;
wobei die Trennbeschichtung eine Permeationssperre gegenüber Butylacetat aufweist, wobei die Permeationssperre wie in der Beschreibung beschrieben bestimmt wird und der damit bestimmte Delta-L*-Wert von 1 bis 20 beträgt
als Topcoat für Thermopapiere.

12. Verwendung der permeationsinhibierenden Trennbeschichtungen gemäß Anspruch 11 **dadurch gekennzeichnet, dass** das Thermopapier ein selbstklebendes Thermopapier ist und als Klebeband ausgeführt ist.

13. Verfahren zur Herstellung der permeationsinhibierenden Trennbeschichtungen gemäß einem der Ansprüche 1 bis 10, indem die Trennbeschichtungen strahlengehärtet sind.

14. Strahlenhärtende Beschichtungsmassen zur Herstellung von permeationsinhibierenden Trennbeschichtungen, die eine Permeationssperre gegenüber Butylacetat aufweisen, enthaltend die Komponenten (I), (II) und optional (III)
(I) 20 bis 90 Gew.-% bezogen auf die Summe der Komponenten (I), (II) und (III) der Zusammensetzung, siliziumfreie Kohlenwasserstoffe umfasst, die aus den Elementen Kohlenstoff, Wasserstoff und Sauerstoff bestehen und die mindestens eine ethylenisch ungesättigte, radikalisch polymerisierbare Gruppe und die keine Oxyethylengruppen aufweisen, wobei die Komponente (I) zu mindestens 80 bis zu 100 Gew.-% bezogen auf die Gesamtmasse der Komponente (I) einen Kohlenwasserstoff aufweist, der zwei oder mehr ethylenisch ungesättigte, radikalisch polymerisierbare Gruppen aufweist und mindestens eine aromatische Gruppe;
(II) 10 bis 90 Gew.-% bezogen auf die Summe der Komponenten (I), (II) und (III) der Zusammensetzung, eines oder mehrerer organomodifizierter Silicone mit 50 bis 500, Siliziumatomen, wobei 0,4 bis 10% der Siliziumatome ethylenisch ungesättigte, radikalisch polymerisierbare Gruppen, wobei ein Siliziumatom ein, zwei oder drei solcher Gruppen tragen kann;
(III) 0 bis 70 Gew.-% bezogen auf die Summe der Komponenten (I), (II) und (III) der Zusammensetzung eines oder mehrerer organomodifizierter Silicone mit 4 bis 40 Siliziumatomen, wobei 15 bis 100% der Siliziumatome ethylenisch ungesättigte, radikalisch polymerisierbare Gruppen aufweisen;
und weitere Zusätze, wobei die Permeationssperre wie in der Beschreibung beschrieben bestimmt wird und der damit bestimmte Delta-L*-Wert von 1 bis 20 beträgt.

15. Strahlenhärtende Beschichtungsmassen gemäß Anspruch 14 **dadurch gekennzeichnet, dass** die Zusätze ausgewählt sind aus Photoinitiatoren, Photosensibilisatoren, Füllstoffen, Pigmenten, Lösemittel, phosphorhaltige Verbindungen welche unter UV Licht polymerisieren, Stabilisatoren z.B. Phosphite oder hindered amine light stabilizers (HALS), Anti Misting Additive und Amin-Synergisten.

## Claims

1. Permeation-inhibiting release coatings obtainable by curing a composition comprising components (I), (II) and optionally (III)
(I) 20 to 90% by weight, based on the sum total of components (I), (II) and (III) of the composition, comprises silicon-free hydrocarbons which consist of the elements carbon, hydrogen and oxygen and which have at least one ethylenically unsaturated free-radically polymerizable group and have no oxyethylene groups,
wherein component (I) has a hydrocarbon to an extent of at least 80 up to 100% by weight, based on the total mass of component (I), having two or more ethylenically unsaturated free-radically polymerizable groups and at least one aromatic group;
(II) 10 to 90% by weight, based on the sum total of components (I), (II) and (III) of the composition, of one or more organomodified silicones having 50 to 500 silicon atoms, it being possible for 0.4 to 10% of the silicon atoms to bear ethylenically unsaturated free-radically polymerizable groups, and it being possible for one silicon atom to bear one, two or three such groups;
(III) 0 to 70% by weight, based on the sum total of components (I), (II) and (III) of the composition, of one or more organomodified silicones having 4 to 40 silicon atoms, wherein 15 to 100% of the silicon atoms have ethylenically unsaturated free-radically polymerizable groups;
and optionally further additives;
wherein the release coating has a permeation barrier against butyl acetate, wherein the permeation barrier is determined as described in the description and the delta-L* value determined thereby is from 1 to 20.

2. Permeation-inhibiting release coatings according to Claim 1, **characterized in that** their delta-L* values are from 1 to 18 and especially preferably their delta-L* values are from 2 to 15.

3. Permeation-inhibiting release coatings according to Claim 1 or 2, **characterized in that** their release forces are at most 80 cN/2.5 cm, more preferably at most 50 cN/2.5 cm, more preferably at most 30 cN/2.5 cm, wherein the lower value is greater than 1 cN/2.5 cm, preferably greater than 3 cN/2.5 cm, wherein the release force is determined in accordance with FINAT Handbook 8th Edition, The Hague/NI, 2009 under the designation FTM 10.

4. Permeation-inhibiting release coatings according to any of Claims 1 to 3, **characterized in that** none of the components which are free of silicon atoms have both oxyethylene groups and ethylenically unsaturated free-radically polymerizable groups.

5. Permeation-inhibiting release coatings according to any of Claims 1 to 4, **characterized in that** components (I), (II) and (III) have groups, as ethylenically unsaturated free-radically polymerizable groups, that are selected from acrylic and/or methacrylic ester functions, more preferably acrylic ester functions.

6. Permeation-inhibiting release coatings according to any of Claims 1 to 5, **characterized in that** component (I) is present at 20 to 70% by weight, more preferably 30 to 60% by weight, based on the sum total of components (I), (II) and (III),
component (II) is present at 30 to 80% by weight and particularly preferably 40 to 70% by weight, based on the sum total of components (I), (II) and (III) of the composition and
component (III) is present at 0 to 40% by weight, based on the sum total of components (I), (II) and (III) of the composition.

7. Permeation-inhibiting release coatings according to any of Claims 1 to 6, **characterized in that** the components (II) one or more compounds of the formula (I),
M¹ₐM²_{b}D¹_{c}D²_{d} (I)
where
M¹ = [R¹₃SiO_{1/2}],
M² = [R¹₂R²SiO_{1/2}],
D¹ = [R¹₂SiO_{2/2}],
D² = [R¹R²SiO_{2/2}],
a = 0 to 2,
b = 0 to 2, and a + b = 2,
c = 50 to 490, preferably 60 to 290, more preferably 70 to 190, especially preferably 80 to 170,
d = 0 to 15, preferably 0 to 10,
and the ratio of the sum (b + d) to the sum (c + d + 2) is from 0.004 up to 0.1, preferably 0.006 to 0.8, and more preferably 0.008 to 0.7;
and the sum (c + d + 2) is 50 to 500, preferably 60 to 300, more preferably 70 to 200, especially preferably 80 to 180,
R¹ denotes identical or different aliphatic hydrocarbons having 1 to 10 carbon atoms or aromatic hydrocarbons having 6 to 12 carbon atoms, preferably methyl and/or phenyl groups, especially preferably methyl groups,
R² denotes identical or different hydrocarbons which have 1 to 5 identical or different ester functions, the hydrocarbon being linear, cyclic, branched
and/or aromatic, preferably linear or branched, and the ester functions being selected from ethylenically unsaturated free-radically polymerizable ester functions and from ester groups that are not free-radically polymerizable.

8. Permeation-inhibiting release coatings according to any of Claims 1 to 7, **characterized in that** the components (III) one or more compounds of the formula (II),
M¹ₑM³_{f}D¹_{g}D³ₕ (II)
where
M¹ = [R¹₃SiO_{1/2}],
M³ = [R¹₂R³SiO_{1/2}],
D¹ = [R¹₂SiO_{2/2}],
D³ = [R¹R³SiO_{2/2}],
e = 0 to 2,
f = 0 to 2, preferably zero, and e + f = 2,
g = 0 to 38, preferably 10 to 26,
h = 0 to 20, preferably 4 to 15,
and the ratio of the sum (f + h) to the sum (g + h + 2) is from 0.15 up to 1, preferably 0.2 to 0.5, and the sum (g + h + 2) is 4 to 40, preferably 10 to 30,
and the radicals R¹ are defined as specified for formula (I),
R³ denotes identical or different hydrocarbons which have 1 to 5 identical or different ester functions, the hydrocarbon being linear, cyclic, branched and/or aromatic, preferably linear or branched, and the ester functions being selected from ethylenically unsaturated free-radically polymerizable ester functions and from ester groups that are not free-radically polymerizable.

9. Permeation-inhibiting release coatings according to any of Claims 1 to 8, **characterized in that** ester groups that are not free-radically polymerizable are present in component (III) in a numerical proportion preferably of 3 to 20%, more preferably 5 to 15%, based on the number of all ester functions in component (III).

10. Permeation-inhibiting release coatings according to any of Claims 1 to 9, **characterized in that** no ester groups that are not free-radically polymerizable are present in component (II) and ester groups that are not free-radically polymerizable are present in component (III) in a numerical proportion of 5 to 15%, based on the number of all ester functions in component (III).

11. Use of the permeation-inhibiting release coatings obtainable by curing a composition comprising components (I), (II) and optionally (III)
(IV) 20 to 90% by weight, based on the sum total of components (I), (II) and (III) of the composition, comprises silicon-free hydrocarbons which consist of the elements carbon, hydrogen and oxygen and which have at least one ethylenically unsaturated free-radically polymerizable group and have no oxyethylene groups,
wherein component (I) has a hydrocarbon to an extent of at least 80 up to 100% by weight, based on the total mass of component (I), having two or more ethylenically unsaturated free-radically polymerizable groups and at least one aromatic group;
(V) 10 to 90% by weight, based on the sum total of components (I), (II) and (III) of the composition, of one or more organomodified silicones having 50 to 500 silicon atoms, it being possible for 0.4 to 10% of the silicon atoms to bear ethylenically unsaturated free-radically polymerizable groups, and it being possible for one silicon atom to bear one, two or three such groups;
(VI) 0 to 70% by weight, based on the sum total of components (I), (II) and (III) of the composition, of one or more organomodified silicones having 4 to 40 silicon atoms, wherein 15 to 100% of the silicon atoms have ethylenically unsaturated free-radically polymerizable groups;
and optionally further additives;
wherein the release coating has a permeation barrier against butyl acetate, wherein the permeation barrier is determined as described in the description and the delta-L* value determined thereby is from 1 to 20,
as topcoat for thermal papers.

12. Use of the permeation-inhibiting release coatings according to Claim 11, **characterized in that** the thermal paper is self-adhesive and is designed as adhesive tape.

13. Method for preparing the permeation-inhibiting release coatings according to any of Claims 1 to 10 by radiation-curing of the release coatings.

14. Radiation-curing coating compositions for preparing permeation-inhibiting release coatings having a permeation barrier against butyl acetate, comprising components (I), (II) and optionally (III)
(I) 20 to 90% by weight, based on the sum total of components (I), (II) and (III) of the composition, comprises silicon-free hydrocarbons which consist of the elements carbon, hydrogen and oxygen and which have at least one ethylenically unsaturated free-radically polymerizable group and have no oxyethylene groups,
wherein component (I) has a hydrocarbon to an extent of at least 80 up to 100% by weight, based on the total mass of component (I), having two or more ethylenically unsaturated free-radically polymerizable groups and at least one aromatic group;
(II) 10 to 90% by weight, based on the sum total of components (I), (II) and (III) of the composition, of one or more organomodified silicones having 50 to 500 silicon atoms, it being possible for 0.4 to 10% of the silicon atoms to bear ethylenically unsaturated free-radically polymerizable groups, and it being possible for one silicon atom to bear one, two or three such groups;
(III) 0 to 70% by weight, based on the sum total of components (I), (II) and (III) of the composition, of one or more organomodified silicones having 4 to 40 silicon atoms, wherein 15 to 100% of the silicon atoms have ethylenically unsaturated free-radically polymerizable groups;
and further additives, wherein the permeation barrier is determined as described in the description and the delta-L* value determined thereby is from 1 to 20.

15. Radiation-curing coating compositions according to Claim 14, **characterized in that** the additives are selected from photoinitiators, photosensitizers, fillers, pigments, solvents, phosphorus-containing compounds which polymerize under UV light, stabilizers, e.g. phosphites or hindered amine light stabilizers (HALS), anti-misting additives and amine synergists.

## Revendications

1. Revêtements antiadhésifs inhibant la perméation pouvant être obtenus par durcissement d'une composition contenant les composants (I), (II) et éventuellement (III)
(I) 20 à 90% en poids, par rapport à la somme des composants (I), (II) et (III) de la composition, comprend d'hydrocarbures exempts de silicium, qui sont constitués par les éléments carbone, hydrogène et oxygène et qui présentent au moins un groupe éthyléniquement insaturé, polymérisable par voie radicalaire et qui ne présentent pas de groupes oxyéthylène,
le composant (I) présentant au moins 80 à 100%, par rapport à la masse totale du composant (I), d'un hydrocarbure qui présente deux groupes, ou plus, éthyléniquement insaturés, polymérisables par voie radicalaire et au moins un groupe aromatique ;
(II) 10 à 90% en poids, par rapport à la somme des composants (I), (II) et (III) de la composition, d'un ou de plusieurs silicones organomodifiés comprenant 50 à 500 atomes de silicium, 0,4 à 10% des atomes de silicium pouvant porter des groupes éthyléniquement insaturés, polymérisables par voie radicalaire, un atome de silicium pouvant porter un, deux ou trois de ces groupes ;
(III) 0 à 70% en poids, par rapport à la somme des composants (I), (II) et (III) de la composition, d'un ou de plusieurs silicones organomodifiés comprenant 4 à 40 atomes de silicium, 15 à 100% des atomes de silicium présentant des groupes éthyléniquement insaturés, polymérisables par voie radicalaire ;
et le cas échéant d'autres additifs ; le revêtement antiadhésif présentant une barrière de perméation par rapport à l'acétate de butyle, la barrière de perméation étant déterminée comme décrit dans la description et la valeur Delta-L* ainsi déterminée valant 1 à 20.

2. Revêtements antiadhésifs inhibant la perméation selon la revendication 1, **caractérisés en ce que** leurs valeurs Delta-L* valent 1 à 18 et en particulier de préférence leurs valeurs Delta-L* valent 2 à 15.

3. Revêtements antiadhésifs inhibant la perméation selon la revendication 1 ou 2, **caractérisés en ce que** leurs valeurs de séparation valent au maximum 80 cN/2,5 cm, plus préférablement au maximum 50 cN/2,5 cm, plus préférablement au maximum 30 cN/2,5 cm, la valeur inférieure étant supérieure à 1 cN/2,5 cm, de préférence supérieure à 3 cN/2,5 cm, la valeur de séparation étant déterminée selon FINAT Handbook, 8ème édition, La Haye/Nl, 2009 sous la dénomination FTM 10.

4. Revêtements antiadhésifs inhibant la perméation selon l'une quelconque des revendications 1 à 3, **caractérisés en ce qu'**aucun des composants, qui sont exempts d'atomes de silicium, ne présentent à la fois des groupes oxyéthylène et des groupes éthyléniquement insaturés, polymérisables par voie radicalaire.

5. Revêtements antiadhésifs inhibant la perméation selon l'une quelconque des revendications 1 à 4, **caractérisés en ce que** les composants (I), (II) et (III) présentent, comme groupes éthyléniquement insaturés, polymérisables par voie radicalaire, ceux choisis parmi les fonctions ester de l'acide acrylique et/ou de l'acide méthacrylique, de manière particulièrement préférée les fonctions ester de l'acide acrylique.

6. Revêtements antiadhésifs inhibant la perméation selon l'une quelconque des revendications 1 à 5, **caractérisés en ce que** le composant (I) est contenu à raison de 20 à 70% en poids, plus préférablement à raison de 30 à 60% en poids par rapport à la somme des composants (I), (II) et (III),
le composant (II) est contenu à raison de 30 à 80% en poids et en particulier de préférence à raison de 40 à 70% en poids par rapport à la somme des composants (I), (II) et (III) de la composition et
le composant (III) est contenu à raison de 0 à 40% en poids par rapport à la somme des composants (I), (II) et (III) de la composition.

7. Revêtements antiadhésifs inhibant la perméation selon l'une quelconque des revendications 1 à 6, **caractérisés en ce que** les composants (II) un ou plusieurs composés de formule (I)
M¹ₐM²_{b}D¹_{c}D²_{d} (I)
dans laquelle
M¹ = [R¹₃SiO_{1/2}],
M² = [R¹₂R²SiO_{1/2}],
D¹ = [R¹₂SiO_{2/2}],
D² = [R¹R²SiO_{2/2}],
a = 0 à 2,
b = 0 à 2, où a + b = 2,
c = 50 à 490, de préférence 60 à 290, plus préférablement 70 à 190, en particulier de préférence 80 à 170,
d = 0 à 15, de préférence 0 à 10,
le rapport de la somme (b + d) à la somme (c + d + 2) valant 0,004 à 0,1, de préférence 0,006 à 0,8 et plus préférablement 0,008 à 0,7 ;
la somme (c + d + 2) valant 50 à 500, de préférence 60 à 300, plus préférablement 70 à 200, en particulier de préférence 80 à 180,
R¹ représente des hydrocarbures aliphatiques identiques ou différents comprenant 1 à 10 atomes de carbone ou des hydrocarbures aromatiques comprenant 6 à 12 atomes de carbone, de préférence des groupes méthyle et/ou phényle, en particulier de préférence des groupes méthyle,
R² représente des hydrocarbures identiques ou différents, qui présentent 1 à 5 fonctions ester identiques ou différentes, l'hydrocarbure étant linéaire, cyclique, ramifié et/ou aromatique, de préférence linéaire ou ramifié, les fonctions ester étant choisies parmi les fonctions ester éthyléniquement insaturées, polymérisables par voie radicalaire et les groupes ester non polymérisables par voie radicalaire.

8. Revêtements antiadhésifs inhibant la perméation selon l'une quelconque des revendications 1 à 7, **caractérisés en ce que** les composants (III) un ou plusieurs composés de formule (II)
M¹ₑM³_{f}D¹_{g}D³ₕ (II)
dans laquelle
M¹ = [R¹₃SiO_{1/2}],
M³ = [R¹₂R³SiO_{1/2}],
D¹ = [R¹₂SiO_{2/2}],
D³ = [R¹R³SiO_{2/2}],
e = 0 à 2,
f = 0 à 2, de préférence zéro, où e + f = 2,
g = 0 à 38, de préférence 10 à 26,
h = 0 à 20, de préférence 4 à 15,
le rapport de la somme (f + h) à la somme (g + h + 2) valant 0,15 à 1, de préférence 0,2 à 0,5, la somme (g + h + 2) valant 4 à 40, de préférence 10 à 30,
les radicaux R¹ étant définis comme indiqué pour la formule (I),
R³ représente des hydrocarbures identiques ou différents, qui présentent 1 à 5 fonctions ester identiques ou différentes, l'hydrocarbure étant
linéaire, cyclique, ramifié et/ou aromatique, de préférence linéaire ou ramifié, les fonctions ester étant choisies parmi les fonctions ester éthyléniquement insaturées, polymérisables par voie radicalaire et les groupes ester non polymérisables par voie radicalaire.

9. Revêtements antiadhésifs inhibant la perméation selon l'une quelconque des revendications 1 à 8, **caractérisés en ce que** des groupes ester non polymérisables par voie radicalaire sont contenus dans le composant (III) en une proportion numérique de préférence de 3 à 20%, plus préférablement de 5 à 15%, par rapport au nombre de toutes les fonctions ester dans le composant (III).

10. Revêtements antiadhésifs inhibant la perméation selon l'une quelconque des revendications 1 à 9, **caractérisés en ce que** le composant (II) ne contient pas de groupes ester non polymérisables par voie radicalaire et le composant (III) contient les groupes ester non polymérisables par voie radicalaire en une proportion numérique de 5 à 15% par rapport au nombre de toutes les fonctions ester dans le composant (III).

11. Utilisation des revêtements antiadhésifs inhibant la perméation pouvant être obtenus par durcissement d'une composition contenant les composants (I), (II) et éventuellement (III)
(IV) 20 à 90% en poids, par rapport à la somme des composants (I), (II) et (III) de la composition, comprend d'hydrocarbures exempts de silicium, qui sont constitués par les éléments carbone, hydrogène et oxygène et qui présentent au moins un groupe éthyléniquement insaturé, polymérisable par voie radicalaire et qui ne présentent pas de groupes oxyéthylène,
le composant (I) présentant au moins 80 à 100%, par rapport à la masse totale du composant (I), d'un hydrocarbure qui présente deux groupes, ou plus, éthyléniquement insaturés, polymérisables par voie radicalaire et au moins un groupe aromatique ;
(V) 10 à 90% en poids, par rapport à la somme des composants (I), (II) et (III) de la composition, d'un ou de plusieurs silicones organomodifiés comprenant 50 à 500 atomes de silicium, 0,4 à 10% des atomes de silicium pouvant porter des groupes éthyléniquement insaturés, polymérisables par voie radicalaire, un atome de silicium pouvant porter un, deux ou trois de ces groupes ;
(VI) 0 à 70% en poids, par rapport à la somme des composants (I), (II) et (III) de la composition, d'un ou de plusieurs silicones organomodifiés comprenant 4 à 40 atomes de silicium, 15 à 100% des atomes de silicium présentant des groupes éthyléniquement insaturés, polymérisables par voie radicalaire ;
et le cas échéant d'autres additifs ;
le revêtement antiadhésif présentant une barrière de perméation par rapport à l'acétate de butyle, la barrière de perméation étant déterminée comme décrit dans la description et la valeur Delta-L* ainsi déterminée valant 1 à 20.
comme couche de finition pour papier thermique.

12. Utilisation des revêtements antiadhésifs inhibant la perméation selon la revendication 11, **caractérisée en ce que** le papier thermique est un papier thermique autoadhésif et conçu sous forme de ruban adhésif.

13. Procédé pour la fabrication des revêtements antiadhésifs inhibant la perméation selon l'une quelconque des revendications 1 à 10, en ce que les revêtements antiadhésifs sont durcis par un rayonnement.

14. Masses de revêtement durcissant sous l'effet d'un rayonnement pour la fabrication de revêtements antiadhésifs inhibant la perméation, qui présentent une barrière de perméation par rapport à l'acétate de butyle, contenant les composants (I), (II) et éventuellement (III)
(I) 20 à 90% en poids, par rapport à la somme des composants (I), (II) et (III) de la composition, comprend d'hydrocarbures exempts de silicium, qui sont constitués par les éléments carbone, hydrogène et oxygène et qui présentent au moins un groupe éthyléniquement insaturé, polymérisable par voie radicalaire et qui ne présentent pas de groupes oxyéthylène,
le composant (I) présentant au moins 80 à 100%, par rapport à la masse totale du composant (I), d'un hydrocarbure qui présente deux groupes, ou plus, éthyléniquement insaturés, polymérisables par voie radicalaire et au moins un groupe aromatique ;
(II) 10 à 90% en poids, par rapport à la somme des composants (I), (II) et (III) de la composition, d'un ou de plusieurs silicones organomodifiés comprenant 50 à 500 atomes de silicium, 0,4 à 10% des atomes de silicium pouvant porter des groupes éthyléniquement insaturés, polymérisables par voie radicalaire, un atome de silicium pouvant porter un, deux ou trois de ces groupes ;
(III) 0 à 70% en poids, par rapport à la somme des composants (I), (II) et (III) de la composition, d'un ou de plusieurs silicones organomodifiés comprenant 4 à 40 atomes de silicium, 15 à 100% des atomes de silicium présentant des groupes éthyléniquement insaturés, polymérisables par voie radicalaire ;
et le cas échéant d'autres additifs, la barrière de perméation étant déterminée comme décrit dans la description et la valeur Delta-L* ainsi déterminée valant 1 à 20.

15. Masses de revêtement durcissant sous l'effet d'un rayonnement selon la revendication 14, **caractérisées en ce que** les additifs sont choisis parmi les photoinitiateurs, les agents de photosensibilisation, les charges, les pigments, les solvants, les composés phosphorés qui polymérisent sous une lumière UV, les stabilisants, par exemple les phosphites ou les stabilisants de type amine stériquement encombrée (hindered amine light stabilizer - HALS), les additifs antibuée et les synergistes de type amine.
